# EUROPÄISCHE PATENTANMELDUNG

(11) **EP 2 322 811 A1**
(43) Veröffentlichungstag der Anmeldung: **18.05.2011**
(21) Anmeldenummer: 10405215.4
(22) Anmeldetag: 09.11.2010
(51) Int. Cl.: F16B 7/04, F16B 35/02, F16L 19/06

(54) **Haltevorrichtung zum wieder lösbaren Befestigen eines zylindrischen Körpers**

(30) Priorität: 12.11.2009 CH 17422009
(71) Anmelder: Baumer Innotec AG, 8500 Frauenfeld (CH)
(72) Erfinder: Wehrle, Wolfgang, 78467 Konstanz (DE); Jürgens, Alexander, 8500 Frauenfeld (CH)
(74) Vertreter: Gachnang, Hans Rudolf

(57) **Zusammenfassung**

Die Haltevorrichtung zum Befestigen eines zylindrischen Körpers (1) in einer Bohrung (5) eines Halteteils (3) umfasst eine Klemmhülse (7) mit Längsschlitzen (11), wobei der axial vordere Abschnitt dieser Klemmhülse (7) einen Aussendurchmesser Al aufweist, der kleiner oder gleich dem Bohrungsdurchmesser AO ist, und wobei an einem hinteren Abschnitt der Klemmhülse (7) ein Aussengewinde (15) ausgebildet ist, dessen Aussendurchmesser A2 grösser ist als der Bohrungsdurchmesser AO des Halteteils (3).

## Beschreibung

Gegenstand der Erfindung ist eine Haltevorrichtung zum wieder lösbaren Befestigen eines zylindrischen Körpers gemäss den Merkmalen des Patentanspruchs 1.

Sensoren umfassen oft zylindrische Gehäuse aus Metall oder Kunststoff. Solche Sensorgehäuse haben in der Regel ein Aussengewinde. Sie können an Haltern oder Maschinenteilen befestigt werden, indem sie teilweise durch Durchgangsbohrungen an diesen Teilen hindurchgesteckt und beidseitig mittels Muttern an diesen Teilen festgeschraubt werden.

Diese Art der Befestigung weist Nachteile auf. Die Ausrichtung bzw. Justierung solcher Sensoren bei der Montage ist schwierig. Sie ist wegen fehlender Abdichtungen nicht oder nur bedingt für Anwendungen mit erhöhten Anforderungen an die Hygiene geeignet, wie sie z.B. in der Nahrungsmittelindustrie auftreten. Zylindrische Sensoren können auch ohne Aussengewinde ausgebildet sein und werden dann in der Regel mittels Klemmverbindungen an Maschinenteilen befestigt.

Die WO-A1-2006094749 offenbart eine Klemmhülse zur lösbaren Halterung eines längsausgedehnten Bauteils von konstantem Querschnitt, z.B. eines Rohrs, Stabs oder dergleichen an einem wenigstens ein Durchgangs-Gewindeloch aufweisenden Haltekörper, z.B. einem Träger, Balken, Rohr oder dergleichen. Die Klemmhülse umfasst einen Hülsenkopf, dessen Durchmesser jenen eines daran anschliessenden Hülsenschafts überragt. Der Hülsenschaft umfasst ein mit dem Gewindeloch des Haltekörpers schraubendes Aussengewinde und an seinem dem Kopf gegenüberliegenden freien Ende wenigstens einen achsparallelen Schlitz. Innen hat der Hülsenschaft eine Ausnehmung, in die das zu klemmende, formgleiche Bauteil mit Schiebesitz einfügbar ist. Die Ausnehmung weist eine gleichförmige Aufweitung vom Kopf zum freien Ende des Hülsenschafts hin auf, derart, dass ihre lichte Weite am freien Ende grösser ist als das Aussenmass des eingefügten Bauteils. Die in das Gewindeloch eingeschraubte Klemmhülse umspannt das eingefügte Bauteil entlang ihrer gesamten Spannlänge.

Bei dieser Vorrichtung ist am Träger ein Gewindeloch erforderlich. Die Klemmhülse hat aufgrund des Aussengewindes, welches sich am Schaft vom Hülsenkopf bis zum gegenüberliegenden freien Ende erstreckt, eine relativ grosse Wandstärke. Entsprechend können im Gewindeloch nur Sensoren mit vergleichsweise kleinen Aussendurchmessern befestigt werden. Im Weiteren ist die Verbindung des stabförmigen Bauteils mit dem Träger nicht dicht.

Eine Aufgabe der vorliegenden Erfindung ist es, eine Haltevorrichtung zum wieder lösbaren Befestigen eines zylindrischen Sensors oder eines anderen zylindrischen Körpers ohne Aussengewinde an einem Halteteil mit einer Bohrung zum Einführen dieses Sensors zu schaffen, derart, dass die vom Sensor innerhalb der Bohrung beanspruchbare Querschnittfläche möglichst gross ist.

Eine weitere Aufgabe der Erfindung besteht darin, diese Haltevorrichtung so auszubilden, dass sie eine dichtende Verbindung des zylindrischen Körpers mit dem Halteteil ermöglicht.

Diese Aufgaben werden gelöst durch eine Haltevorrichtung und durch ein Verfahren zum Befestigen eines zylindrischen Körpers gemäss den Merkmalen des Patentanspruchs 1.

Anhand einiger Figuren wird die Erfindung im Folgenden näher beschrieben. Dabei zeigen
- Figur 1: eine Explosionsdarstellung einer ersten Ausführungsform der Haltevorrichtung zum Befestigen eines Sensors mit einem zylindrischen Gehäuse an einem Halteteil mit einer Bohrung,
- Figur 2: eine vergrösserte Detailansicht der Haltevorrichtung aus Figur 1,
- Figur 3: einen Längsschnitt durch ein mit der Haltevorrichtung aus Figur 1 am Halteteil befestigten zylindrischen Körper,
- Figur 3a: einen Längsschnitt einer Anordnung einer Haltevorrichtung mit abgewinkelten Dichtprofilen,
- Figur 4: eine Explosionsdarstellung einer Anordnung mit einer zweiten Ausführungsform der Haltevorrichtung,
- Figur 5: eine vergrösserte Detailansicht der Haltevorrichtung aus Figur 4
- Figur 6: einen Längsschnitt durch einen mit der Haltevorrichtung aus Figur 1 am Halteteil befestigten zylindrischen Körper,
- Figur 7: eine Explosionsdarstellung einer Anordnung mit einer dritten Ausführungsform der Haltevorrichtung,
- Figur 8: eine vergrösserte Detailansicht der Haltevorrichtung aus Figur 7
- Figur 9: ein weiteres Detail der Anordnung aus Figur 7,
- Figur 10: einen Längsschnitt durch einen mit der Haltevorrichtung aus Figur 7 am Halteteil befestigten zylindrischen Körper.

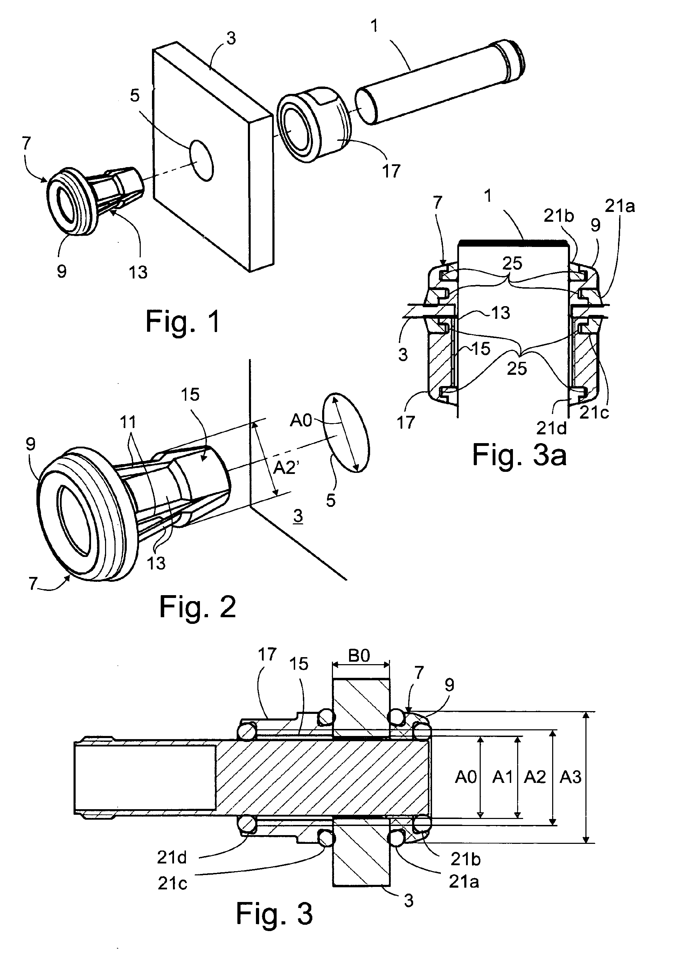

Figur 1 zeigt eine Explosionsdarstellung einer Haltevorrichtung zum wieder lösbaren Befestigen eines zylindrischen Körpers 1 an einem Halteteil 3 mit einer Bohrung 5 die einen Durchmesser AO von beispielsweise 12mm aufweist. Die Haltevorrichtung umfasst eine Klemmhülse 7 mit einem ringartigen Flansch 9, dessen maximaler Aussendurchmesser A3 grösser ist als der Bohrungsdurchmesser A0. Angrenzend an diesen Flansch 9 ragt eine Hülse axial nach hinten. Die Hülse weist mehrere, beispielsweise vier, vom hinteren Ende vorzugsweise bis zum Flansch 9 reichende Längsschlitze 11 auf, welche die Hülse in vier gleichartige Laschen 13 unterteilen. Der axial vordere Abschnitt dieser Laschen 13 bzw. der Hülse hat ohne Verformung der Laschen 13 einen Aussendurchmesser A1, der kleiner oder gleich dem Innendurchmesser A0 der Bohrung 5 ist. Im axial hinteren Bereich der Laschen 13 bzw. der Hülse ist ein Aussengewinde 15 ausgebildet, beispielsweise ein M14-Gewinde, dessen Aussendurchmesser A2 ohne Verformung der Laschen 13 grösser ist als der Bohrungsdurchmesser A0 oder zumindest grösser als der Aussendurchmesser A1 im vorne an das Aussengewinde 15 angrenzenden Bereich der Hülse. Die axiale Länge des dünnwandigen Abschnitts der Laschen 13 ohne Aussengewinde 15 ist grösser oder gleich der Dicke bzw. Stärke B0 des Haltekörpers 3 bzw. der Tiefe der Bohrung 5. Die freien Enden der Laschen 13 können elastisch oder inelastisch radial nach innen gedrückt bzw. verformt werden, derart, dass sich der maximale Aussendurchmesser A2' der Hülse im Bereich des Aussengewindes 15 so stark reduziert, dass die Laschen 13 von vorne her durch die Bohrung 5 mit dem Durchmesser A0 hindurchgeführt werden können. Anschliessend werden die Laschen 13 wieder in ihre ursprüngliche Lage nach aussen gebogen, und der zylindrische Körper 1 bzw. der Sensor kann in die lichte Öffnung der Klemmhülse 7 eingeschoben und in seiner axialen Lage ausgerichtet bzw. justiert werden. Beim anschliessenden Aufschrauben einer zur Haltevorrichtung gehörenden Mutter 17 mit zum Aussengewinde 15 der Hülse passendem Innengewinde wird die Haltevorrichtung verspannt. Dabei werden sowohl die Haltevorrichtung am Haltekörper 3 als auch der zylindrische Körper 1 in der Haltevorrichtung festgeklemmt und wieder lösbar befestigt. An den Grenzen zwischen dem Flansch 9 und der Vorderseite des Haltekörpers 3 und/oder zwischen dem Flansch 9 und dem zylindrischen Körper 1 und/oder zwischen der Mutter 17 und der Rückseite des Haltekörpers 3 und/oder zwischen der Mutter 17 und dem zylindrischen Körper 1 können Dichtelemente 21a, 21b, 21c, 21d, insbesondere lose O-Ringe oder Dichtringe oder an die Klemmhülse 7 bzw. die Mutter 17 angespritzte Dichtlippen ausgebildet sein. Figur 3a zeigt einen Längsschnitt einer leicht modifizierten Anordnung der Haltevorrichtung, wobei die Dichtelemente 21a, 21b, 21c, 21d, als Dichtprofile mit L-förmigem Querschnitt ausgebildet sind. Am Flansch 9 und an der Mutter 17 sind an der Innenseite und an der Aussenseite entsprechende Absätze bzw. Nuten 25 ausgebildet, in welche jeweils einer der Schenkel dieser Dichtprofile eingreift. Die Form und Grösse der Dichtprofile und der Aufnahmen für diese Dichtprofile am Flansch 9 und der Mutter 17 sind so aufeinander abgestimmt, dass bei eingespannt gehaltenem zylindrischem Körper 1 möglichst keine Spalten entstehen. Insbesondere kann bei einer oder mehrerer der Nuten jeweils eine der beiden Seitenwände kürzer als die jeweils gegenüberliegende zweite Seitenwand ausgebildet sein, derart, dass der nicht in die Nut eintauchende Schenkel des Dichtprofils bündig an die Peripherie des Flansches 9 bzw. der Mutter 17 anschliesst.

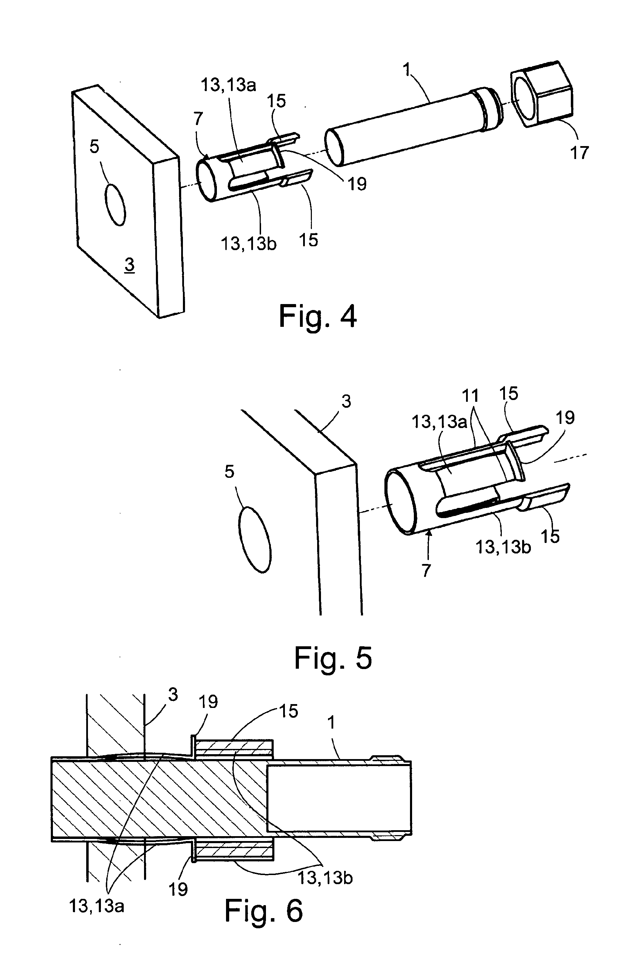

Die Figuren 4, 5 und 6 zeigen eine weitere Ausführungsform der Haltevorrichtung. Anstelle eins Flansches 9, der beim Verspannen der Haltevorrichtung als Anschlagfläche dient und an der Vorderseite des Haltekörpers 3 ansteht, sind hier zwei Laschen 13a bzw. ein Teil der Laschen 13, etwas kürzer als die restlichen Laschen 13, 13b und ohne Aussengewinde, jedoch mit radial nach aussen abgewinkelten Endschenkeln 19 ausgebildet. Sie weisen zwischen einem vorne an die Längsschlitze 11 anschliessenden ringförmigen Abschnitt und den Endschenkeln 19 eine leicht konvexe Wölbung auf. Beim Aufschrauben der Mutter 17 gelangt diese in Anlage mit den Endschenkeln 19, verstärkt beim Weiterdrehen die Wölbung, staucht und verformt schliesslich diese Laschen 13a derart, dass der zylindrische Körper 1 am Haltekörper 3 gehalten wird.

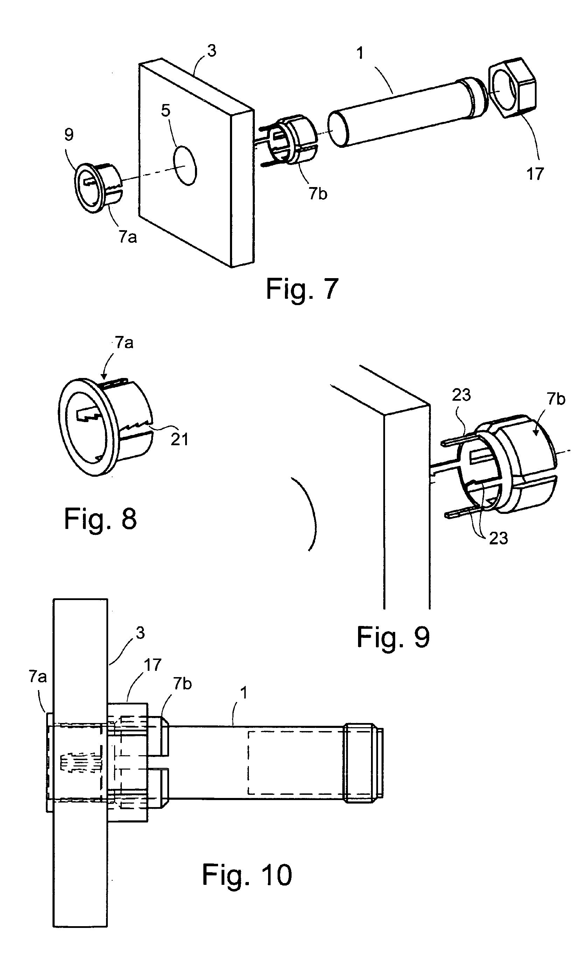

Die Figuren 7 bis 10 zeigen eine weitere alternative Ausführungsform der Haltevorrichtung, wobei die Klemmhülse 7 zweiteilig ausgebildet ist. Der vordere Teil 7a umfasst den Flansch 9 und einen axial nach hinten ragenden Hülsenteil mit Rastnasen 21 oder anderen Rückhaltemitteln. Der hintere Teil 7b der Klemmhülse 7 umfasst axial hervorragende Haltefinger 23 oder andere Verankerungselemente zum vorzugsweise wieder lösbaren formschlüssigen oder kraftschlüssigen Verbinden mit den Rastnasen bzw. Rückhaltemitteln am vorderen Teil 7a der Klemmhülse 7. Im Unterschied zu den Ausführungsformen gemäss den Figuren 1 bis 6 werden die beiden Teile 7a, 7b von beiden Seiten des Haltekörpers 3 her zu einer Klemmhülse 7 zusammengefügt. Selbstverständlich könnte die Verbindung der beiden Teile 7a, 7b auch in anderer Weise erfolgen.

Die Haltevorrichtung oder Teile davon können aus Kunststoff oder Metall, insbesondere aus Edelstahl gefertigt sein.

## Patentansprüche

1. Haltevorrichtung zum wieder lösbaren Befestigen eines zylindrischen Körpers (1) an einem Halteteil (3) mit einer Bohrung (5), wobei eine zum Einführen und Festklemmen des zylindrischen Körpers (1) ausgebildete Klemmhülse (7) mindestens teilweise in diese Bohrung (5) einführbar ist, **dadurch gekennzeichnet, dass** diese Klemmhülse (7) einen ringartigen hinteren Abschnitt mit einem Aussengewinde (15) und axial angrenzend vor diesem hinteren Abschnitt einen weiteren ringartigen Abschnitt ohne Aussengewinde (15) umfasst, dass der Aussendurchmesser A1 der Klemmhülse (7) in diesem weiteren Abschnitt kleiner oder gleich dem Aussendurchmesser A2 im hinteren Abschnitt ist, und dass mindestens der hintere Abschnitt der Klemmhülse (7) durch nach hinten offene Längsschlitze (11) getrennte Laschen (13) umfasst, derart, dass das Aussengewinde (15) abschnittweise an den Laschen (13) ausgebildet und durch die Längsschlitze (11) unterbrochen ist.

2. Haltevorrichtung nach Anspruch 1, **dadurch gekennzeichnet, dass** die Laschen (13) im Bereich eines an die Längsschlitze (11) anschliessenden vorderen Abschnitts der Klemmhülse (7) miteinander verbunden und plastisch oder elastisch derart verformbar sind, dass der maximale Aussendurchmesser A2 der derart verformten Klemmhülse (7) im Bereich des hinteren Abschnitts mit dem Aussengewinde (15) kleiner ist als der Aussendurchmesser der unverformten Klemmhülse (7) im daran angrenzenden vorderen Bereich ohne Aussengewinde (15).

3. Haltevorrichtung nach einem der Ansprüche 1 oder 2, **dadurch gekennzeichnet, dass** der vordere Abschnitt der Klemmhülse (7) einen radial hervorragenden ringartigen Flansch (9) umfasst.

4. Haltevorrichtung nach Anspruch 3, **dadurch gekennzeichnet, dass** am Flansch (9) ein erstes ringartiges Dichtelement (21a) und/oder ein zweites ringartiges Dichtelement (21b) gelagert oder ausgebildet sind, wobei das erste Dichtelement (21a) zum Abdichten gegenüber dem Halteteil (3) und das zweite Dichtelement (21b) zum Abdichten gegenüber dem zylindrischen Körper (1) ausgebildet sind.

5. Haltevorrichtung nach Anspruch 4, **dadurch gekennzeichnet, dass** die ringartigen Dichtelemente (21a, 21b) einen L-förmigen Querschnitt aufweisen, und dass an der Innenseite und an der Aussenseite des Flanschs (9) Nuten 25 zum Aufnehmen jeweils eines der Schenkel der Dichtelemente (21a, 21b) ausgenommen sind, wobei jeweils eine Seitenwand dieser Nuten 25 kürzer als die gegenüberliegende andere Seitenwand ausgebildet ist, derart, dass der zweite Schenkel des Dichtelements (21a, 21b) bündig an die Peripherie des Flansches (9) anschliesst.

6. Haltevorrichtung nach einem der Ansprüche 1 oder 2, **dadurch gekennzeichnet, dass** zwischen Laschen (13b), deren Endbereiche Abschnitte des Aussengewindes (15) umfassen, kürzere Laschen (13a) angeordnet sind, deren hintere Endabschnitte radial nach aussen abgewinkelte Endschenkel (19) umfassen, wobei diese Endschenkel (19) axial vor dem Aussengewinde (15) angeordnet sind.

7. Haltevorrichtung nach Anspruch 6, **dadurch gekennzeichnet, dass** die kürzeren Laschen (13a) zwischen den Endschenkeln (19) und dem vorderen Ende konvex gewölbt sind.

8. Haltevorrichtung nach Anspruch 1, **dadurch gekennzeichnet, dass** die Klemmhülse (7) einen vorderen Teil (7a) und einen hinteren Teil (7b) umfasst, und dass die beiden Teile (7a, 7b) mittels an diesen Teilen (7a, 7b) ausgebildeter Rückhaltemittel und damit korrespondierender Verankerungselemente verbindbar sind.
